# EUROPÄISCHE PATENTSCHRIFT

(11) **EP 1 923 276 B1**
(45) Veröffentlichungstag und Bekanntmachung des Hinweises auf die Patenterteilung: **10.09.2008**
(21) Anmeldenummer: 06023774.0
(22) Anmeldetag: 15.11.2006
(51) Int. Cl.: B60R 21/217

(54) **Luftsackmodul**
Airbag module
Modul de sac gonflable

(43) Veröffentlichungstag der Anmeldung: 21.05.2008
(73) Patentinhaber: Delphi Technologies, Inc., Troy, Michigan 48007 (US)
(72) Erfinder: Guthke, Detlev, 58089 Hagen (DE); Maiwald, Helmut, 51515 Kuerten (DE)
(74) Vertreter: Manitz, Finsterwald & Partner GbR

(56) Entgegenhaltungen:
- WO-A-03/084784
- WO-A-20/05025947
- DE-A1-3102004 015 75
- US-A- 5 611 563

## Beschreibung

Die vorliegende Erfindung betrifft ein Luftsackmodul für ein Kraftfahrzeug, wobei das Luftsackmodul eine einen Luftsack bildende Luftsackhülle sowie einen sich innerhalb der Luftsackhülle befindlichen Gasgenerator umfasst. Dabei weist der Gasgenerator einen Anschlussstutzen auf, welcher sich durch eine Öffnung der Luftsackhülle nach außen erstreckt, um darüber dem Gasgenerator die zur Zündung erforderlichen Zündsignale zuführen zu können.

Aus der WO 03/084784 und der DE 102004 015 753 A1 ist es bekannt, den Gasgenerator eines Luftsackmoduls außerhalb des Luftsacks anzuordnen.

Grundsätzlich ist es bekannt, den Gasgenerator eines Luftsackmoduls im Innern des Luftsacks anzuordnen und dementsprechend die zur Übertragung der Zündsignale erforderlichen Kontakte aus dem Innern des Luftsacks nach außen zu führen, um daran die Zünddrähte anschließen zu können. Es werden dementsprechend üblicherweise Abdichtungselemente erforderlich, um den Luftsack nach außen hin abzudichten. Die Abdichtung mit derartigen Abdichtungselementen erfolgt üblicherweise punktuell, was zur Folge hat, dass die während der Aktivierung des Luftsackmoduls auftretenden Zugkräfte nicht gleichmäßig verteilt werden, wodurch die Auswirkungen der ohnehin bereits enormen Beanspruchungen des Luftsacks während der Aktivierung des Luftsackmoduls verstärkt werden. Um diese Beanspruchungen aufnehmen zu können, werden die Abdichtungselemente üblicherweise verhältnismäßig robust ausgeführt, womit sich jedoch wiederum die Spannungen in der Luftsackhülle im Bereich um das Abdichtungselement herum erhöhen. Dies macht es wiederum erforderlich, die Luftsackhülle mit zusätzlichen Materiallagen zu verstärken.

Aus der US 5 799 969 A ist ein gattungsgemäßes Luftsackmodul bekannt.

Ausgehend von den voran beschriebenen Problemen liegt der vorliegenden Erfindung die Aufgabe zugrunde, eine Realisierung anzugeben, mit welcher der Anschlussstutzen eines innenliegenden Gasgenerators dicht nach außen geführt werden kann und bei der geringere Spannungskonzentrationen in der Luftsackhülle auftreten.

Die der Erfindung zugrunde liegende Aufgabe wird mit einem Luftsackmodul gelöst, welches die Merkmale des Anspruchs 1 aufweist. Insbesondere erfolgt die Lösung der Aufgabe dadurch, dass ein Befestigungsclip zur Lagesicherung der Luftsackhülle im Bereich der Öffnung an dem Gasgenerator vorgesehen ist. Dabei wirkt der Befestigungsclip mit dem Anschlussstutzen über am Befestigungsclip und/oder am Anschlussstutzen ausgebildete Sicherungsmittel zusammen, die den Befestigungsclip am Anschlussstutzen axial sichern, wobei der Befestigungsclip in radialer Richtung von dem Anschlussstutzen auskragt, so dass der Befestigungsclip den Anschlussstutzen umfangsseitig zumindest bereichsweise umgibt

Dabei kann der Befestigungsclip beispielsweise einen zu der Nut des Anschlussstutzens korrespondierend ausgebildeten Eingriffsabschnitt aufweisen, mit dem er in die Nut des Anschlussstutzens eingreift.

Der Befestigungsclip stellt somit eine Art Rückhaltelement oder Riegel dar, welcher von dem Anschlussstutzen radial absteht und diesen umfangseitig zumindest bereichsweise umgibt, so dass die Luftsackhülle, wenn der Gasgenerator gezündet wird, infolge der dabei auftretenden Volumenzunahme der Luftsackhülle, nicht von dem Anschlussstutzen abrutschen kann. Der Befestigungsclip verhindert somit effektiv ein Abrutschen der Luftsackhülle.

Die Befestigung bzw. Lagesicherung der Luftsackhülle unter Verwendung des Befestigungsclips erweist sich insbesondere dadurch als vorteilhaft, dass der Befestigungsclip im Falle der Zündung des Gasgenerators die freie Beweglichkeit der Luftsackhülle in axialer Richtung des Anschlussstutzens nicht völlig einzuschränken braucht. Die Luftsackhülle kann sich somit, bis sie mit dem Befestigungsclip an Anlage gelangt, in axialer Richtung in einem gewissen Ausmaß bewegen, so dass die Bewegungsverformungen der Luftsackhülle nicht unmittelbar in Spannungen in der Luftsackhülle umgewandelt werden. Es treten somit keine oder zumindest nur geringe Spannungskonzentrationen im Bereich des Befestigungsclips in der Luftsackhülle auf.

Wenn sich die Luftsackhülle während der Aktivierung des Luftsackmoduls an dem Befestigungsclip anlegt, werden die im Bereich des Anschlussstutzens wirkenden Zugkräfte während der Aktivierung des Luftsackmoduls auf eine größere Fläche verteilt, woraus letztendlich geringere Spannungen im Anbindungsbereich der Luftsackhülle am Anschlussstutzen resultieren.

Da die Luftsackhülle zwischen dem Befestigungsclip und dem Gasgenerator zu liegen kommt, wird die Luftsackhülle somit nicht nur an einzelnen Stellen punktuell gegen den Gasgenerator verspannt, sondern legt sich flächig an den Befestigungsclip an, woraus letztendlich die gewünschte Spannungsverteilung bzw. Spannungsreduzierung erfolgt. Je größer daher die radiale Ausladung des Befestigungsclips gewählt wird, um so mehr können die Zugkräfte während der Aktivierung des Luftsackmoduls verteilt werden, woraus die gewünschte Spannungsverteilung bzw. Spannungsreduzierung erfolgt.

Um die während der Aktivierung des Luftsackmoduls frei werdende Bewegungsenergie abpuffern zu können, kann der Befestigungsclip eine Gestalt aufweisen, welche komplementär auf die Gestalt des Gasgenerators im Bereich der Öffnung der Luftsackhülle abgestimmt ist. Die kinetische Energie der Luftsackhülle bei der Aktivierung des Luftsackmoduls kann nämlich so groß sein, dass dadurch der Befestigungsclip verbogen wird. Wenn die Gestalt des Befestigungsclips komplementär auf die Gestalt des Gasgenerators im Bereich der Öffnung der Luftsackhülle abgestimmt ist, gelangt die Luftsackhülle bei der Aktivierung des Gasgenerators frühzeitig mit dem Befestigungsclip in Anlage, so dass die kinetische Energie in Verformungsarbeit des Befestigungsclips umgewandelt werden kann.

Durch eine flächige Verspannung der Luftsackhülle mit dem Befestigungsclip am Gasgenerator kann das Ziel einer Spannungsverringerung in der Luftsackhülle erreicht werden, da dadurch die Luftsackhülle nicht in der üblichen Weise punktuell am Anschlussstutzen angebunden ist. Vielmehr kann die Luftsackhülle zwischen dem Gasgenerator und dem Befestigungsclip in einem größeren Bereich flächig verspannt oder eingeklemmt werden, so dass die im Bereich des Anschlussstutzens wirkenden Zugkräfte während der Aktivierung des Luftsackmoduls auf eine größere Fläche verteilt werden können, woraus letztendlich geringere Spannungen im Anbindungsbereich der Luftsackhülle am Anschlussstutzen resultieren.

Vorteilhafte Weiterbildungen des erfindungsgemäßen Luftsackmoduls ergeben sich aus den abhängigen Ansprüchen, der Beschreibung sowie aus den Zeichnungen.

Da es sich bei dem erfindungsgemäßen Luftsackmodul beispielsweise um einen Seitenairbag und insbesondere um einen Fensterairbag handeln kann, bei denen üblicherweise stabförmige Gasgeneratoren zum Einsatz kommen, ist es bevorzugt vorgesehen, den Anschlussstutzen radial an dem stabförmigen Gasgenerator anzuordnen. Durch die radiale Anbringung des Anschlussstutzens steht für den Befestigungsclip mehr Widerlagerfläche im Bereich des Schafts des Gasgenerators zur Verfügung, so dass dementsprechend die während der Aktivierung des Luftsackmoduls auftretenden Zugspannungen auf eine größere Fläche verteilt werden können. Darüber hinaus werden durch die radiale Anbindung des Anschlussstutzens an den Gasgenerator die Dehnungseigenschaften des meist gewebeartigen Materials der Luftsackhülle und die Veränderung der Gewebestruktur während der Aktivierung des Luftsackmoduls berücksichtigt, woraus sich insgesamt ein spannungsärmerer Zustand während der Aktivierung des Luftsackmoduls ergibt. Durch die radiale Anbindung des Anschlussstutzens an den stabförmigen Gasgenerator lässt sich darüber hinaus eine regelmäßige Faltung der Luftsackhülle ohne störende Faltenbildungen im Bereich des Gasgenerators sicherstellen.

Wie bereits erläutert, kann der Anschlussstutzen zumindest eine umfangsseitige Nut, insbesondere eine Ringnut, aufweisen, in die der Befestigungsclip mit einem dazu korrespondierenden Eingriffsabschnitt eingreift. Diese Nut kann als Führungsschiene für den Befestigungsclip dienen, um diesen zur Befestigung an dem Anschlussstutzen auf diesen aufschieben zu können. Dementsprechend kann der Eingriffsabschnitt beispielsweise durch eine in den Befestigungsclip ausgebildete Öffnung gebildet werden, deren umfangsseitige Berandung in die Ringnut eingreift. Mit anderen Worten weist der Anschlussstutzen somit zumindest einen hinterschnittenen Bereich auf, in den der Eingriffsabschnitt des Befestigungsclips eingreift, um den Befestigungsclip an dem Anschlussstutzen anzubringen. Der Befestigungsclip erstreckt sich dabei mit seiner Fläche um die den Eingriffsabschnitt bildende Öffnung herum, womit sichergestellt werden kann, dass die Luftsackhülle im Falle einer Aktivierung des Luftsackmoduls nicht von dem Anschlussstutzen abrutschen kann, da dies durch die von dem Befestigungsclip gebildete Barriere verhindert wird.

Um die Montage des Befestigungsclips möglichst einfach zu gestalten, kann die Eingangsöffnung in eine Montageöffnung münden, welche eine größere Querschnittsfläche als die Eingriffsöffnung aufweist, so das der Befestigungsclip mit der Montageöffnung auf dem Anschlussstutzen zunächst aufgefädelt werden kann, um dann anschließend derart verschoben zu werden, dass die Eingriffsöffnung mit ihrem Eingriffsabschnitt in die Ringnut am Außenumfang des Anschlussstutzens eingreift, so dass der Befestigungsclip in axialer Richtung des Anschlussstutzens fixiert ist. Der Befestigungsclip stellt somit in Verbindung mit der Nut am Anschlussstutzen gewissermaßen eine Steck-Schiebeverbindung ähnlich einem Bajonettverschluss dar, wodurch eine einfache Verbindung mit dem Anschlussstutzen realisiert werden kann. Mit dieser einfachen Schiebeverbindung kann darüber hinaus der Gasgenerator zusammen mit dem Befestigungsclip sowie einem etwaigen zusätzlichen Dichtelement während eines abschließenden Fertigungsschritts an dem Luftsackmodul montiert werden. Hierdurch kann sichergestellt werden, dass sich der Gasgenerator nur für kurze Zeit in der Montagelinie befindet.

Um zu verhindern, dass sich der Befestigungsclip nach der Montage am Anschlussstutzen von diesem wieder löst, kann ein Sicherungselement vorgesehen sein, welches die Mündung der Eingriffsöffnung in die Montageöffnung im montierten Zustand des Befestigungselements blockiert. Bei diesem Sicherungselement kann es sich beispielsweise durch einen aus dem Befestigungsclip beispielsweise durch Stanzen herausgearbeiteten Positivabschnitt handeln, welcher die Montageöffnung im blockierten Zustand der Mündung im Wesentlichen komplementär ergänzt. Das Sicherungselement braucht jedoch nicht vollständig aus dem Befestigungsclip herausgestanzt zu werden, sondern kann mit diesem über einen plastischen Verformungsabschnitt einstückig verbunden sein, so dass keine zusätzlichen Anbindungsmittel zur Anbringung des Sicherungselements am Befestigungsclip vorgesehen werden müssen. Darüber hinaus ist das Sicherungselement über den genannten plastischen Verformungsabschnitt verliersicher mit dem Befestigungsclip verbunden, was sich positiv hinsichtlich der Effizienz bei der Montage des erfindungsgemäßen Luftsackmoduls widerspiegelt.

Um den Befestigungsclip an dem Aufnahmestutzen trotz des Vorhandenseins des Sicherungselements befestigen zu können, weist dieses eine entriegelte Stellung auf, in der es die Montageöffnung freilegt. Andererseits weist das Sicherungselement jedoch auch eine verriegelte Stellung auf, in der es in der genannten Weise die Montageöffnung komplementär ergänzt. Zwischen diesen beiden Stellungen lässt sich das Sicherungselement überführen, wobei sich der plastische Verformungsabschnitt während des Übergangs des Sicherungselements aus der entriegelten Stellung in die verriegelte Stellung plastisch verformt. Durch die plastische Verformung des Verformungsabschnitts kann erreicht werden, dass das Sicherungselement, nachdem es in die verriegelte Stellung überführt wurde, in dieser verharrt, so dass keine zusätzlichen Mittel vorgesehen werden müssen, um das Sicherungselement in dieser Stellung zu halten.

Um ein Luftsackmodul an einem Kraftfahrzeug anbringen zu können, müssen üblicherweise gesonderte Befestigungsmittel vorgesehen werden. Bei dem erfindungsgemäßen Luftsackmodul kann jedoch auf ein derartiges zusätzliches Befestigungsmittel verzichtet werden, indem der Befestigungsclip selbst mit einem Montageabschnitt versehen wird, welcher ausgebildet ist, das Luftsackmodul über den Befestigungsclip an dem Kraftfahrzeug zu befestigen.

Obwohl durch die erfindungsgemäße Anbindung der Luftsackhülle an dem Anschlussstutzen die dort auftretenden Spannungen bereits erheblich reduziert werden können, können eventuell dennoch bereichsweise Spannungsspitzen auftreten. Um dementsprechend einer Überbeanspruchung vorzubeugen, kann die Luftsackhülle zumindest um die Öffnung im Bereich der Verspannung mit dem Befestigungsclip herum mit wenigstens einer zusätzlichen Materiallage, z.B. mit einer von der Luftsackhülle abweichenden Gewebestrukturausrichtung, verstärkt sein. Diese zusätzliche Materiallage kann beispielsweise durch Nähen, Kleben, Schweißen oder Vulkanisieren mit der eigentlichen Luftsackhülle verbunden sein. Mit einer derartigen zusätzlichen Materiallage kann eine gleichmäßige Dehnung der Luftsackhülle im Anschlussbereich an den Anschlussstutzen erzielt werden, wodurch sich in der gewünschten Weise unerwünschte Spannungsspitzen reduzieren lassen.

Im Folgenden wird die vorliegende Erfindung rein beispielhaft anhand eines Ausführungsbeispiels unter Bezugnahme auf die beigefügten Figuren beschrieben. In sämtlichen Figuren sind gleiche oder einander entsprechende Elemente mit gleichen Bezugszeichen gekennzeichnet, wobei:
- Fig. 1: eine perspektivische Darstellung eines Befestigungsclips zeigt;
- Fig. 2: eine andere perspektivische Darstellung des Befestigungsclips der Fig. 1 zeigt;
- Fig. 3: eine perspektivische Untersicht des Befestigungsclips der Fig. 1 zeigt;
- Fig. 4: eine Ansicht eines stabförmigen Gasgenerators mit darauf aufgebrachtem Befestigungsclip zeigt;
- Fig. 5: eine perspektivische Darstellung der Fig. 4 zeigt;
- Fig. 6 bis 11: unterschiedliche Montagezustände jeweils in Drauf- und Ansicht erläutert;
- Fig. 12: eine perspektivische Darstellung einer alternative Ausführungsform eines Befestigungsclips zeigt; und
- Fig. 13: eine Schnittdarstellung durch den Befestigungsclip der Fig. 12 zeigt.

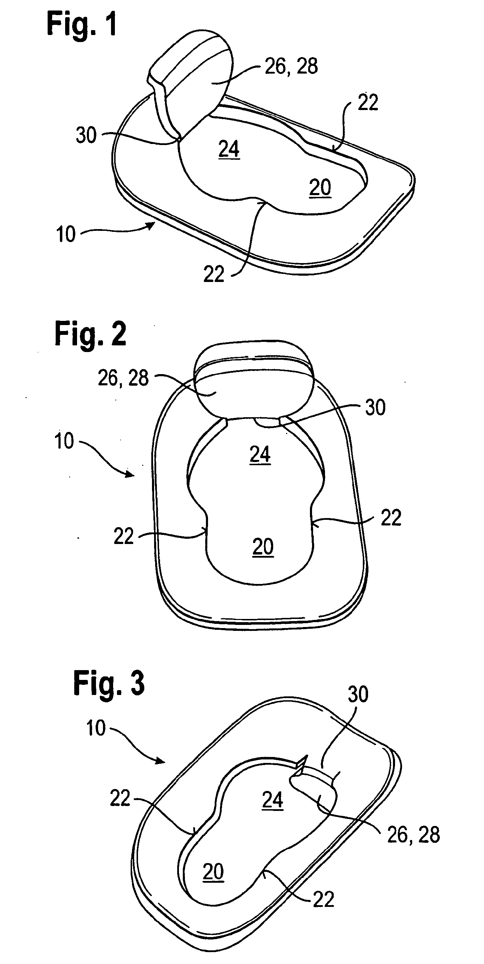

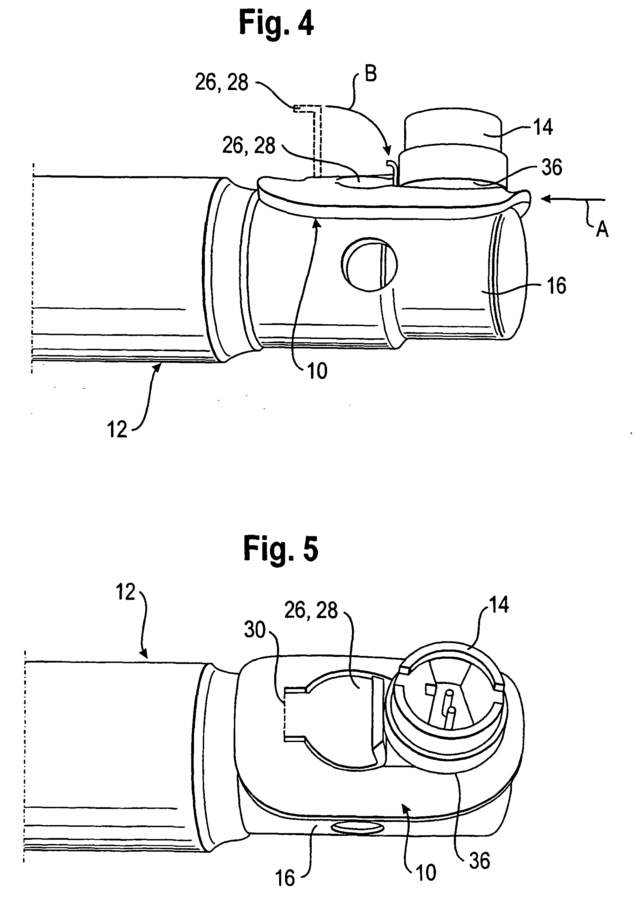

Zunächst wird unter Bezugnahme auf die Fig. 1 bis 3 eine Ausgestaltung eines Befestigungsclips 10 erläutert, mit welchem sich eine Luftsackhülle im Bereich einer Öffnung an einem Gasgenerator bzw. an einem Anschlussstutzen des Gasgenerators befestigen und abdichten lässt. Wie den Fig. 1 bis 3 entnommen werden kann, handelt es sich bei dem Befestigungsclip 10 um ein schalenartig gewölbtes Blechelement, wobei die Wölbung derart auf die Kontur eines stabförmigen Gasgenerators 12 (siehe Fig. 4 und 5) abgestimmt ist, dass der Befestigungsclip 10 mit seiner konkav gewölbten Fläche mit der konvexen Außenkontur des Gasgenerators 12 zusammenpasst.

Der Befestigungsclip 10 weist eine schlüssellochförmige Öffnung auf, welche sich aus zwei ineinander übergehenden Öffnungsbereichen zusammensetzt. Bei diesen Öffnungsbereichen handelt es sich zum einen um eine Eingriffsöffnung 20 mit zwei sich beabstandet gegenüberliegenden Eingriffsabschnitten 22, und zum anderen um eine Montageöffnung 24, welche eine größere lichte Weite als die Eingriffsöffnung 20 aufweist und in welche die Eingriffsöffnung übergeht.

Die Eingriffsöffnung 20 kann beispielsweise dadurch erzeugt werden, dass diese vollständig aus dem Befestigungsclip 10 ausgestanzt wird. Demgegenüber wird die Montageöffnung 24 umfangsseitig nicht vollständig ausgestanzt, so dass ein Positivabschnitt 26 entsteht, welcher über einen Verformungsabschnitt 30 einstückig mit dem Sicherungsclip 10 verbunden bleibt. In den Fig. 1 bis 3 befindet sich der Positivabschnitt 26 in einer aus der Fläche des Befestigungsabschnitts 10 herausgebogenen Stellung, so dass die Montageöffnung 24 von dem Positivabschnitt 26 freigegeben ist, welche Stellung im Rahmen der vorliegenden Erfindung auch als entriegelte Stellung des durch den Positivabschnitt 26 gebildeten Sicherungselements 26 bezeichnet wird.

In den folgenden Passagen wird die Montage des Befestigungsclips 10 auf einem Gasgenerator 12 auf dessen Anschlussstutzen 14 unter Bezugnahme auf die Fig. 4 bis 11 beschrieben. Wie am besten der Fig. 4 entnommen werden kann, weist der Gasgenerator 12, welcher im Innenraum des Luftsacks des erfindungsgemäßen Luftsackmoduls aufgenommen werden soll, einen im Wesentlichen stabförmigen, zylindrischen Schaft 16 auf, von dem ein Anschlussstutzen 14 radial abzweigt, über welchen dem Gasgenerator 12 die zum Zünden erforderlichen Zündsignale zugeführt werden.

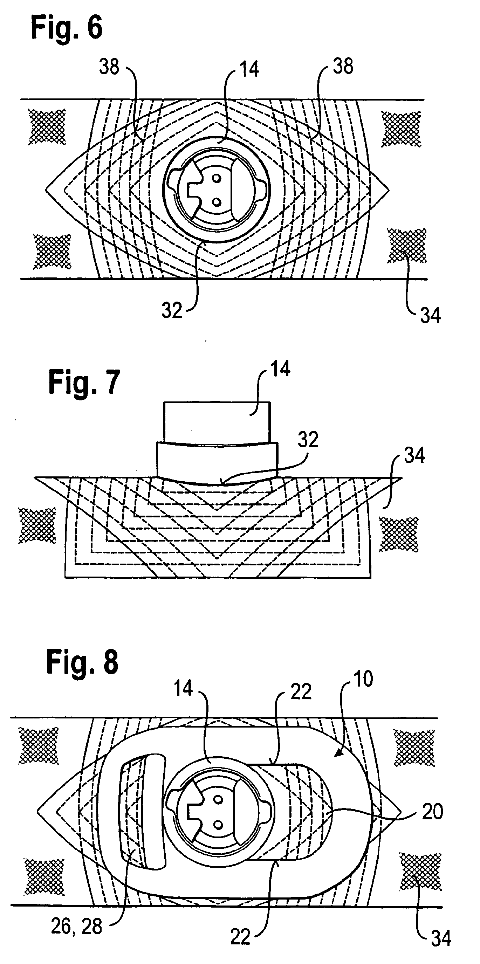

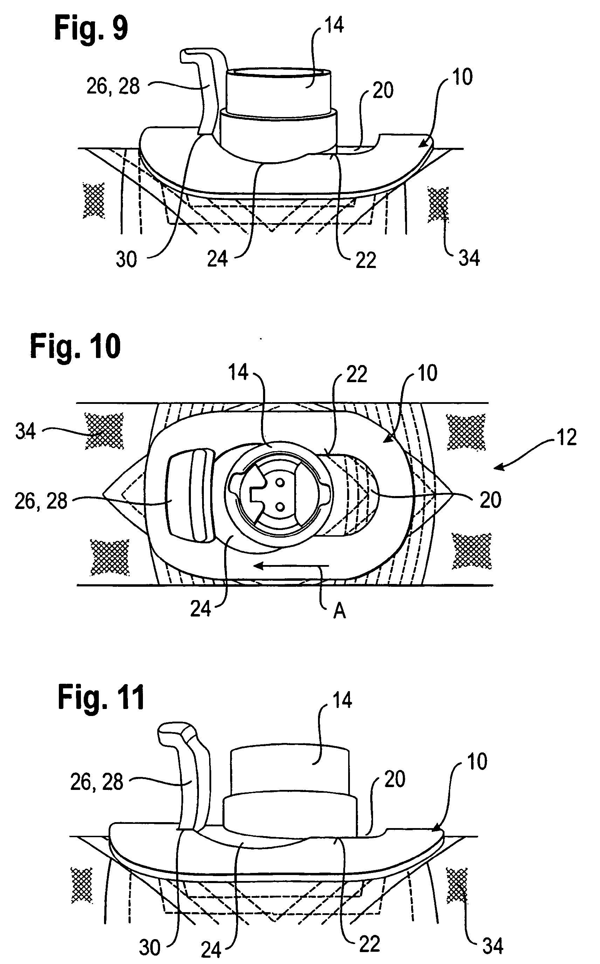

Um den Gasgenerator 12 aus dem von der Luftsackhülle 34 (Fig. 6 bis 10) gebildeten Innenraum nach außen zu führen, weist die Luftsackhülle 34 eine Öffnung 32 auf, durch welche der Anschlussstutzen 14 nach außen geführt werden kann, wie dies am besten die Fig. 6 und 7 zeigen. Um den Befestigungsclip 10 auf dem Anschlussstutzen 14 befestigen zu können, nachdem der Gasgenerator 12 mit seinem Anschlussstutzen 14 durch die Öffnung 32 hindurch gesteckt wurde, wird der Befestigungsclip 10 mit seiner Montageöffnung 24 auf den Anschlussstutzen 14 aufgefädelt, wie dies in den Fig. 8 und 9 dargestellt ist. Die Montageöffnung 24 weist hierzu eine etwas größere Öffnungsfläche auf, als es der Querschnittsfläche des Anschlussstutzens 14 entspricht, so dass der Befestigungsclip 10 auf einfache Weise auf den Anschlussstutzen 14 aufgesetzt werden kann. Hierdurch kommt die Luftsackhülle 34 zwischen der konkav gewölbten Fläche des Befestigungsclips 10 und dem Schaft 16 des Gasgenerators 12 zu liegen.

Um nun ein Abrutschen der Luftsackhülle 34 von dem Anschlussstutzen 14 zu vermeiden, wird der Befestigungsclip 10 aus der in den Fig. 8 und 9 dargestellten Position in Richtung des Pfeils A (Fig. 10) nach links verschoben, so dass die die Eingriffsöffnung 20 teilweise begrenzenden Eingriffsabschnitte 22 in die Ringnut 36 des Anschlussstutzens 14 (Fig. 9) eingreifen.

Um bedarfsweise eine Verspannung der Luftsackhülle 34 gegen den Schaft 16 des Gasgenerators 12 zu erreichen, kann die Wölbung des Befestigungsclips 10 einen etwas geringeren Krümmungsradius als der Gasgenerator 12 bzw. dessen Schaft 16 aufweisen. Hierdurch kann erreicht werden, dass sich der Befestigungsclip 10 mit seinen Eingriffsabschnitten 22 elastisch federnd in der Ringnut 36 abstützt, wodurch der Befestigungsclip 10 in einen gespannten Zustand übergeht, so dass die Luftsackhülle 34 gegen den Schaft 16 des Gasgenerators 12 verspannt wird.

Um den Befestigungsclip 10 in der auf den Anschlussstutzen 14 aufgeschobenen Position zu sichern, wird abschließend das durch den Positivabschnitt 26 gebildete Sicherungselement 26 aus der entriegelten Stellung in die verriegelte Stellung gebogen (Pfeil B), wie dies in der Fig. 4 erkannt werden kann, wodurch der Verformungsabschnitt 30 derart plastisch verformt wird, dass er in der verriegelten Stellung dauerhaft verharrt. Das freie Ende des Sicherungselements 26 kommt dadurch an oder zumindest benachbart zu dem Aufnahmestutzen 14 zu liegen, so dass der Befestigungsclip 10 nicht mehr aus der nunmehr gesicherten Endstellung in verschoben werden kann.

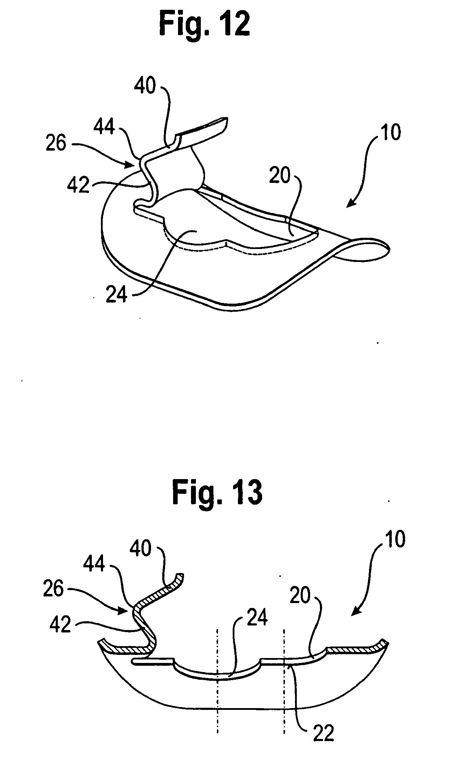

Wie der Schnittdarstellung der Fig. 13 entnommen werden kann, kann das Sicherungselements 26 eine in sich abgewinkelte Form mit zwei zueinander abgewinkelten Schenkeln 40, 42 aufweisen, welche gemeinsam eine Art Kniehebelmechanismus bilden. Das abgewinkelte Sicherungselements 26 kann somit zunächst verschwenkt werden, so dass nur der Verformungsabschnitt 30 verformt wird. Sobald dann das Sicherungselement 26 mit seinem freien Ende an dem Gasgenerator 12 anliegt, kann dann auf das Kniegelenk 44 des Kniehebelmechanismus 40, 42, 44 eine Kraft aufgebracht werden, so dass sich der Kniehebelmechanismus 40, 42, 44 streckt, wobei auch das Kniegelenk 44 plastisch verformt wird, womit letztendlich der Befestigungsclip in seiner Endstellung am Anschlussstutzen 14 gesichert ist.

Wie den Fig. 6 und 7 entnommen werden kann, ist der Bereich um den Anschlussstutzen 14 herum mit einer Vielzahl an unterschiedlich ausgerichteten Nähten 38 versehen. Durch dieses Nahtmuster 38 wird zum einen der Bereich um den Anschlussstutzen 14 herum verstärkt. Darüber hinaus dienen die Nähte 38 dazu, im Innern der Luftsackhülle 34 zusätzliche Materiallagen (nicht erkennbar) mit der Luftsackhülle 34 um den Anschlussstutzen 14 herum zu vernähen, um diesem Bereich zusätzliche Festigkeit zu verleihen. Darüber hinaus können diese zusätzlichen Materiallagen eine von der Luftsackhülle 34 abweichende Gewebestrukturausrichtung aufweisen, womit eine gleichmäßige Dehnung der Luftsackhülle 34 infolge der bei einer Aktivierung des Luftsackmoduls auftretenden Zugkräfte sichergestellt werden kann.

### Bezugszeichenliste

- 10: Befestigungsclip
- 12: Gasgenerator
- 14: Anschlussstutzen
- 16: Schaft
- 20: Eingriffsöffnung
- 22: Eingriffsabschnitt
- 24: Montageöffnung
- 26: Sicherungselement, Positivabschnitt
- 30: Verformungsabschnitt
- 32: Öffnung in 34
- 34: Luftsackhülle
- 36: Ringnut
- 38: Naht
- 40: Schenkel
- 42: Schenkel
- 44: Kniegelenk zwischen 40 und 42

- A: Verschieberichtung
- B: Schwenkbewegung

## Patentansprüche

1. Luftsackmodul für ein Kraftfahrzeug, mit
- einer einen Luftsack bildenden Luftsackhülle (34); und
- einem sich innerhalb der Luftsackhülle (34) befindlichen Gasgenerator (12) mit einem Anschlussstutzen (14), welcher sich durch eine Öffnung (32) der Luftsackhülle (34) nach außen erstreckt; und
- einem an dem Anschlussstutzen (14) angeordneten Befestigungsclip (10) zur Lagesicherung der Luftsackhülle (34) im Bereich der Öffnung (32) an dem Gasgenerator (12);
**dadurch gekennzeichnet daß** der Befestigungsclip (10) mit Anschlussstutzen (14) über am Befestigungsclip (10) und/oder am Anschlussstutzen (14) ausgebildete Sicherungsmittel (22, 36) zusammenwirkt, die den Befestigungsclip (10) am Anschlussstutzen (14) axial sichern, wobei der Befestigungsclip (10) in radialer Richtung von dem Anschlussstutzen (14) auskragt, so dass der Befestigungsclip (10) den Anschlussstutzen (14) umfangsseitig zumindest bereichsweise umgibt.

2. Luftsackmodul nach Anspruch 1,
**dadurch gekennzeichnet, dass**
der Befestigungsclip (10) in eine umfangseitige Nut (36) des Anschlussstutzens (14) mit einem korrespondierend dazu ausgebildeten Eingriffsabschnitt (22) eingreift.

3. Luftsackmodul nach Anspruch 1 oder 2,
**dadurch gekennzeichnet, dass**
der Gasgenerator (12) eine stabförmige Gestalt aufweist, von der der Anschlussstutzen (14) radial abzweigt.

4. Luftsackmodul nach zumindest einem der voranstehenden Ansprüche,
**dadurch gekennzeichnet, dass**
der Eingriffsabschnitt (22) durch eine in dem Befestigungsclip (10) ausgebildete Eingriffsöffnung (20) gebildet ist.

5. Luftsackmodul nach Anspruch 4,
**dadurch gekennzeichnet, dass**
die Eingriffsöffnung (20) in eine Montageöffnung (24) größerer Querschnittsfläche mündet.

6. Luftsackmodul nach zumindest einem der voranstehenden Ansprüche,
**dadurch gekennzeichnet, dass**
der Befestigungsclip (10) zur Überführung des Anschlussstutzens (14) von der Montageöffnung (24) in die Eingriffsöffnung (20) verschiebbar ist, so dass die Lüftsackhülle in Abhängigkeit der Stellung des Befestigungsclips (10) mit diesem verspannt ist.

7. Luftsackmodul nach zumindest einem der voranstehenden Ansprüche,
**dadurch gekennzeichnet, dass**
der Befestigungsclip (10) einen kombinierten Steck-Schiebeverschluss (20, 22, 24) aufweist.

8. Luftsackmodul nach einem der Ansprüche 5 bis 7,
**dadurch gekennzeichnet, dass**
zumindest die Mündung der Eingriffsöffnung (20) in die Montageöffnung (24) im montierten Zustand des Befestigungselements (10) von einem Sicherungselement (26) blockiert ist.

9. Luftsackmodul nach Anspruch 8,
**dadurch gekennzeichnet, dass**
das Sicherungselement (26) durch einen aus dem Befestigungsclip herausgearbeiteten Positivabschnitt 26 gebildet ist, welcher die Montageöffnung (24) im blockierten Zustand der Mündung komplementär ergänzt.

10. Luftsackmodul nach Anspruch 8 oder 9,
**dadurch gekennzeichnet, dass**
das Sicherungselement (26) mit dem Befestigungsclip (10) über einen plastischen Verformungsabschnitt (30) einstückig verbunden ist.

11. Luftsackmodul nach Anspruch 10,
**dadurch gekennzeichnet, dass**
das Sicherungselement (26) eine entriegelte Stellung, in der es die Montageöffnung (24) freigibt, und eine verriegelte Stellung aufweist, in der es die Montageöffnung (24) komplementär ergänzt, wobei der plastische Verformungsabschnitt (30) sich während des Übergangs des Sicherungselements (26) von der entriegelten Stellung in die verriegelte Stellung plastisch verformt.

12. Luftsackmodul nach zumindest einem der Ansprüche 8 bis 11,
**dadurch gekennzeichnet, dass**
das Sicherungselement (26) zwischen der entriegelten Stellung und der verriegelten Stellung verschwenkbar ist.

13. Luftsackmodul nach zumindest einem der voranstehenden Ansprüche,
**dadurch gekennzeichnet, dass**
der Befestigungsclip (10) einen Montageabschnitt aufweist, welcher ausgebildet ist, das Luftsackmodul über den Befestigungsclip (10) an dem Kraftfahrzeug zu befestigen.

14. Luftsackmodul nach zumindest einem der voranstehenden Ansprüche,
**dadurch gekennzeichnet, dass**
die Luftsackhülle (34) zumindest um die Öffnung (32) im Bereich der Verspannung mit dem Befestigungsclip (10) mit wenigstens einer zusätzlichen Materiallage, die insbesondere eine von der Luftsackhülle (34) abweichende Gewebestrukturausrichtung aufweist, verstärkt ist.

## Claims

1. An airbag module for a motor vehicle comprising
- an airbag envelope (34) forming an airbag; and
- a gas generator (12) located inside the airbag envelope (34) and having a connection stub (14) which extends outwardly through an opening (32) of the airbag envelope (34); and
- a fastening clip (10) arranged at the connection stub (14) for the positional securing of the airbag envelope (34) to the gas generator (12) in the region of the opening (32);
**characterized in that**
the fastening clip (10) cooperates with the connection stub (14) via securing means (22, 36) which are formed at the fastening clip (10) and/or at the connection stub (14) and secure the fastening clip (10) axially to the connection stub (14), with the fastening clip (10) projecting from the connection stub (14) in the radial direction so that the fastening clip (10) surrounds the connection stub (14) at least regionally at the peripheral side.

2. An airbag module in accordance with claim 1, **characterized in that** the fastening clip (10) engages into a groove (36) of the connection stub (14) at the peripheral side with an engagement segment (22) made in a complementary manner thereto.

3. An airbag module in accordance with claim 1 or claim 2, **characterized in that** the gas generator (12) has a bar-shaped design from which the connection stub (14) branches off radially.

4. An airbag module in accordance with at least one of the preceding claims, **characterized in that** the engagement section (22) is formed by an engagement opening (20) formed in the fastening clip (10).

5. An airbag module in accordance with claim 4, **characterized in that** the engagement opening (20) opens into an assembly opening (24) of a larger cross-sectional area.

6. An airbag module in accordance with at least one of the previous claims, **characterized in that** the fastening clip (10) can be displaced for the moving of the connection stub (14) from the assembly opening (24) into the engagement opening (20) so that the airbag envelope is tensioned with the fastening clip (10) in dependence on the position thereof.

7. An airbag module in accordance with at least one of the previous claims, **characterized in that** the fastening clip (10) has a combined plug/push closure (20, 22, 24).

8. An airbag module in accordance with any one of the claims 5 to 7, **characterized in that** at least the opening of the engagement opening (20) into the assembly opening (24) is blocked by a securing element (26) in the assembled state of the fastening element (10).

9. An airbag module in accordance with claim 8, **characterized in that** the securing element (26) is formed by a positive section (26) which is worked out of the fastening clip and which supplements the assembly opening (24) in a complementary manner in the blocked state of the opening.

10. An airbag module in accordance with claim 8 or claim 9, **characterized in that** the securing element (26) is connected to the fastening clip (10) in one piece via a plastic deformation section (30).

11. An airbag module in accordance with claim 10, **characterized in that** the securing element (26) has an unlocked position in which it releases the assembly opening (24) and a locked position in which it supplements the assembly opening (24) in a complementary manner, with the plastic deformation section (30) deforming plastically during the transition of the securing element (26) from the unlocked position into the locked position.

12. An airbag module in accordance with at least one of the claims 8 to 11, **characterized in that** the securing element (26) is pivotable between the unlocked position and the locked position.

13. An airbag module in accordance with at least one of the previous claims, **characterized in that** the fastening clip (10) has an assembly opening which is adapted to fasten the airbag module to the motor vehicle via the fastening clip (10).

14. An airbag module in accordance with at least one of the preceding claims, **characterized in that** the airbag envelope (34) is reinforced at least around the opening (32) in the region of the tensioning with the fastening clip (10) by at least one additional material layer which in particular has a fabric structure alignment differing from the airbag envelope (34).

## Revendications

1. Module de coussin gonflable destiné à un véhicule, comportant :
une gaine de coussin gonflable (34) formant un coussin gonflable ; et
un générateur de gaz (12) se trouvant à l'intérieur de la gaine de coussin gonflable (34), comportant un raccord (14), qui s'étend vers l'extérieur au travers d'une ouverture (32) de la gaine de coussin gonflable (34) ; et
une attache de fixation (10) disposée sur le raccord (14), permettant d'assurer le positionnement de la gaine de coussin gonflable (34) dans la zone de l'ouverture (32) sur le générateur de gaz (12) ;
**caractérisé en ce que** l'attache de fixation (10) coopère avec le raccord (14) par l'intermédiaire des moyens de blocage (22, 36) prévus sur l'attache de fixation (10) et / ou sur le raccord (14), lesquels bloquent axialement l'attache de fixation (10) sur le raccord (14), sachant que l'attache de fixation (10) dépasse dans la direction radiale du raccord (14), de telle sorte que l'attache de fixation (10) entoure le raccord (14) au moins sur une section de sa périphérie.

2. Module de coussin gonflable selon la revendication 1, **caractérisé en ce que** l'attache de fixation (10) s'engrène dans une rainure périphérique (36) du raccord (14) avec une section d'engrènement (22) configurée de manière correspondante.

3. Module de coussin gonflable selon la revendication 1 ou 2, **caractérisé en ce que** le générateur de gaz (12) présente une configuration en barre, à partir de laquelle le raccord (14) s'écarte radialement.

4. Module de coussin gonflable selon au moins l'une quelconque des revendications précédentes, **caractérisé en ce que** la section d'engrènement (22) est formée par une ouverture d'engrènement (20) ménagée dans l'attache de fixation (10).

5. Module de coussin gonflable selon la revendication 4, **caractérisé en ce que** l'ouverture d'engrènement (20) débouche dans une ouverture de montage (24) ayant une plus grande section transversale.

6. Module de coussin gonflable selon au moins l'une quelconque des revendications précédentes, **caractérisé en ce que** l'attache de fixation (10) est mobile pour faire passer le raccord (14) de l'ouverture de montage (24) à l'ouverture d'engrènement (20), de telle sorte que la gaine du coussin gonflable peut être calée avec celui-ci en fonction de la position de l'attache de fixation (10).

7. Module de coussin gonflable selon au moins l'une quelconque des revendications précédentes, **caractérisé en ce que** l'attache de fixation (10) présente une fermeture de type enfichage/poussée (20, 22, 24) combinée.

8. Module de coussin gonflable selon l'une quelconque des revendications 5 à 7, **caractérisé en ce que** au moins l'embouchure de l'ouverture d'engrènement (20), à l'état monté de l'élément de fixation (10), est bloquée dans l'ouverture de montage (24) par un élément de blocage (26).

9. Module de coussin gonflable selon la revendication 8, **caractérisé en ce que** l'élément de blocage (26) est formé par une section positive (26) formée à partir de l'attache de fixation, qui complète de manière complémentaire l'ouverture de montage (24) à l'état bloqué de l'embouchure.

10. Module de coussin gonflable selon la revendication 8 ou 9, **caractérisé en ce que** l'élément de blocage (26) est relié d'un seul tenant à l'attache de fixation (10) par l'intermédiaire d'une section de déformation (30) plastique.

11. Module de coussin gonflable selon la revendication 10, **caractérisé en ce que** l'élément de blocage (26) présente une position déverrouillée, dans laquelle il libère l'ouverture de montage (24), et une position verrouillée, dans laquelle il complète de manière complémentaire l'ouverture de montage (24), sachant que la section de déformation (30) plastique fait l'objet d'une déformation plastique lorsque l'élément de blocage (26) passe de la position déverrouillée à la position verrouillée.

12. Module de coussin gonflable selon l'une quelconque des revendications 8 à 11, **caractérisé en ce que** l'élément de blocage (26) peut être amené à pivoter entre la position déverrouillée et la position verrouillée.

13. Module de coussin gonflable selon au moins l'une quelconque des revendications précédentes, **caractérisé en ce que** l'attache de fixation (10) présente une section de montage qui est configurée de manière à fixer le module de coussin gonflable sur le véhicule par l'intermédiaire de l'attache de fixation (10).

14. Module de coussin gonflable selon au moins l'une quelconque des revendications précédentes, **caractérisé en ce que** la gaine de coussin gonflable (34) est renforcée au moins autour de l'ouverture (32), dans la zone du calage avec l'attache de fixation (10), avec au moins une couche de matériau supplémentaire, qui présente en particulier une orientation structurelle de tissu s'écartant de la gaine du coussin gonflable (34).
